# EUROPEAN PATENT APPLICATION

(11) **EP 4 691 634 A1**
(43) Date of publication of application: **11.02.2026**
(21) Application number: 23929025.7
(22) Date of filing: 30.03.2023
(51) Int. Cl.: B01J 27/14, C01B 25/32, B01D 53/14

(54) **MATRICES AND PROCESS FOR MITIGATING CARBON DIOXIDE (CO2) AND OTHER GREENHOUSE GASES USING CALCIUM PHOSPHATES COMPOSITIONS AND APATITES VIA PHYSISORPTION AND PHOTOCATALYSIS**

(71) Applicant: Nicodemos Da Silva, Sidney, 31710-450 Minas Gerais BELO (BR); Peixoto Pinheiro Silva, Ivete, 30492-015 MINAS GERAIS BELO (BR)
(72) Inventor: Nicodemos Da Silva, Sidney, 31710-450 Minas Gerais BELO (BR); Peixoto Pinheiro Silva, Ivete, 30492-015 MINAS GERAIS BELO (BR)
(74) Representative: Lorente Berges, Ana
(86) International application number: PCT/BR2023/050107
(87) International publication number: WO 2024/197364

(57) **Abstract**

This invention relates to porous matrices with high specific surface area composed of calcium phosphates and free hydroxyl sites, intended for the mitigation and photocatalysis of carbon dioxide (CO₂). The material comprises up to five major phases: hydroxyapatite (HA) - Ca₁₀(PO₄)₆(OH)₂; monetite - CaHPO₄; calcium hydroxide - Ca(OH)₂; beta-tricalcium phosphate (β-TCP) - Ca₉(PO₄)₆; and amorphous calcium phosphate. These phases may form binary microstructures such as biphasic calcium phosphate (HA and β-TCP), optimized for greenhouse gas (GHG) capture and immobilization, as well as CO₂ photoreduction under UV radiation. These constituents enable the photocatalytic transformation of carbon dioxide into molecular oxygen (O₂) and elemental carbon in the form of graphene. Beyond their high adsorption capacity, the matrices exhibit chemical stability, maintaining their microstructure without significant alterations during the photocatalytic process. Both calcined and non-calcined calcium phosphates are proposed in this invention as effective CO₂ adsorbents through pressure swing adsorption (PSA) and/or temperature swing adsorption (TSA) mechanisms.

## Description

This invention relates to matrices composed of calcium phosphates with active hydroxyl groups, designed for the physical adsorption (physisorption) and photocatalysis of carbon dioxide (CO₂) and other greenhouse gases (GHGs). Within the technical field of materials for the chemical purification of industrial gases from oxidative combustion, the matrices developed herein exhibit a high adsorption capacity for pollutant gases, promoting their photocatalytic transformation into chemical compounds that are environmentally benign

### BACKGROUND:

Carbon dioxide (CO₂) is one of the main agents of atmospheric pollution. It is the most abundant greenhouse gas generated by human activities (SANTOS; RONCONI, 2013). CO₂ accounts for 76.7% of global emissions and contributes approximately 60% to the effects of global warming, thereby driving the climate changes observed on the planet in recent decades (RIBEIRO et al., 2014).

In Brazil, the primary sources of CO₂ emissions are: (i) land-use change and deforestation (particularly in the Amazon and Cerrado biomes), (ii) agriculture and livestock (mainly methane emissions from cattle enteric fermentation), and (iii) the energy sector (including emissions from steelworks, cement plants, thermoelectric power stations, and transportation). According to data from the Greenhouse Gas Emission Estimates System (SEEG), reported in 2020 by the Climate Observatory, in reference to the Intergovernmental Panel on Climate Change (IPCC) of the United Nations (UN) and based on official figures from the Brazilian Ministry of Science, Technology, Innovations and Communications, Brazil, unlike most of the world, experienced a 9.5% increase in pollutant gas emissions in 2020, while the global average fell by 7% (SEEG, 2020). These three sectors have placed Brazil in the fourth position worldwide (behind the USA, China, and Russia) in the ranking of major polluters since 1850 (Carbon Brief, 2019).

Power generation in thermoelectric plants is one of the sectors of the global economy with the highest CO₂ emission rates. Since fossil fuels are employed to drive the turbines, these plants account for approximately 30% to 40% of total CO₂ emissions. Coal is the energy source with the highest CO₂ emission index: for each ton of oil equivalent (TOE) of coal consumed in electricity generation, about 4.0 tons of CO₂ are released. In the case of oil and its derivatives, CO₂ emissions are approximately 3.0 tons per TOE consumed (PORTAL BRASIL, 2023).

The transportation sector, which according to Carvalho (2011) accounts for approximately 20% of global CO₂ emissions, is indispensable for the development of modern society. However, most modes of transport rely on petroleum-derived fuels (gasoline, kerosene, and diesel), releasing large amounts of greenhouse gases (GHGs) annually and thereby contributing significantly to the intensification of the greenhouse effect.

In addition to the environmental problems exacerbated by global warming caused by anthropogenic emissions of CO₂, carbon monoxide (CO), dioxins, and furans, the World Health Organization (WHO), in its Technical Report (2021), also highlights the harmful health effects observed in populations exposed to critical levels of these gaseous industrial effluents (e.g., USA, China). Around the world, there has been a growing incidence of health complications associated with the inhalation of greenhouse gas (GHG) emissions from agricultural and logistics sectors, particularly CO, dioxins, and furans-three substances that are extremely toxic and detrimental to human health. CO₂, for example, diffuses about 20 times faster than oxygen (O₂) in physiological media; thus, if blood CO₂ levels reach approximately 4%, death may occur. Carbon monoxide binds strongly to hemoglobin, leading to asphyxiation and, subsequently, death by hypoxia. At concentrations above 120 ppm, CO is not only lethal but also highly carcinogenic.

Dioxins, known as polychlorinated dibenzo-p-dioxins (PCDDs), and furans, known as polychlorinated dibenzofurans (PCDFs), are byproducts of various industrial processes. They consist of chlorinated hydrocarbons unintentionally generated during chemical, thermal, and biological operations (such as petroleum refining, metallurgy, cement production, power generation, fertilizer manufacturing, pulp and paper processing, among others) involving combustion in the presence of chlorine, where highly carcinogenic compounds are formed. Industrial emissions of dioxins, polychlorinated biphenyls (PCBs), and furans into the environment can be transported over long distances by atmospheric currents and, to a lesser extent, by river and ocean flows. Dioxins and furans constitute a family of 210 different types of chlorinated hydrocarbons, of which approximately 17 are highly toxic or carcinogenic. Toxicity varies for each type, and due to this fact, efforts have focused on reducing their generation and developing monitoring and mitigation systems.

For this reason, the mitigation of greenhouse gases (GHGs), particularly CO₂, has become the subject of extensive research worldwide. Several techniques for their capture and subsequent storage or utilization are under consideration, including distillation, absorption, adsorption, gas-solid phase reactions, membrane separation, electrochemical pumping, and hydrate formation, among others. However, most of these alternatives have been deemed economically unfeasible due to low absorption efficiency and/or high operational costs (LIU et al., 2009).

Calcium phosphate has shown favorable performance in pressure swing adsorption (PSA) processes (SCHVARTZMAN, 2005; XIAO et al., 2008; ZHANG et al., 2008). Injecting a gas mixture at a pressure well above atmospheric pressure into a bed containing a high-surface-area adsorbent, which selectively captures a target component of the mixture while allowing the remaining gases to pass through (SOUZA, 2014).

Hydroxyapatite (HA), amorphous calcium phosphate (ACP), biphasic calcium phosphate (BCP, composed of HA and β-tricalcium phosphate [β-TCP]), and calcium hydroxide (Ca(OH)₂) exhibit photocatalytic properties combined with high physisorption capacity, i.e., the ability to adsorb organic or inorganic molecules onto particle surfaces either in monolayers (Stern layer) or within the diffuse layer (double layer). In addition, HA possesses significant chemical properties, with a strong ability to incorporate chemical elements or compounds into its crystalline lattice through cationic or anionic exchange, making it an excellent alternative for the removal of heavy metals and other pollutants from air, water, and/or contaminated soils (COSTA et al., 2009).

The physicochemical properties of these calcium phosphates have been increasingly documented in recent literature. The mitigation of greenhouse gases fundamentally occurs through two sequential mechanisms: (i) the physical adsorption of CO₂ (or other GHGs) at the atomic level, and (ii) the subsequent reduction of CO₂ adsorbed on the HA surface into molecular oxygen (O₂) and amorphous elemental carbon (nanostructured graphene-like materials) via photocatalysis under electromagnetic radiation in the ultraviolet (UV) range, with effective reduction demonstrated in experiments employing both natural sunlight and artificial UV lamps.

The reduction of carbon dioxide occurs through two interconnected mechanisms: the physical phase (adsorption) and the chemical phase (artificial photosynthesis). The surface-related implications of particulate calcium phosphate materials were investigated using theoretical models based on quantum mechanics and validated by experiments conducted under relevant conditions that mimic industrial emission sources. The adsorptive characteristics of calcium phosphate for GHG mitigation, particularly CO₂, were modeled in this context.

Adsorption tests were performed with CO₂ concentrations comparable to those found in the exhaust streams of steel plants, thermoelectric power stations, and other coal- or natural gas-based facilities. The physicochemical properties of the calcium phosphate materials employed in these studies-specifically regarding chemical composition, crystalline structure, surface area, particle size and pore size distribution, aspect ratio, and thermal and chemical stability-proved to be directly related to their performance in the CO₂ adsorption process, as well as to their overall life cycle within the context of GHG mitigation.

The adsorption of CO₂ molecules onto calcium phosphate surfaces was modeled by determining binding energies associated with low-energy adsorption sites and assessing performance within the mitigation process. For the functionalization calculations of calcium phosphates, Density Functional Theory (DFT) and Pseudopotential Theory were applied to quantify the energies involved, thereby enabling prediction of adsorbent saturation during CO₂ capture. This approach also provided insights into how chemical bonds between the adsorbent and the adsorbate (CO₂) are established at the surface interface of the system, as well as into the quantum-level energy interactions which, when coupled with UV radiation during photocatalysis, contribute to the reduction of GHG molecules.

In physical adsorption, molecules interact with the adsorbent surface through Van der Waals forces. Although these physical interactions are relatively weak, they operate over long ranges. No bonds are broken or formed, and the chemical nature of the adsorbate remains unchanged or only slightly modified over time. For this reason, it is also referred to as non-specific adsorption (LESSA, 2012). The physisorption mechanism is based on the rapid formation of an interfacial equilibrium concentration, followed by the fast diffusion of gas molecules into the pores of the adsorbent. Understanding the gas-surface interactions is fundamental to characterizing adsorption, which is defined in terms of the physical and chemical properties of the adsorbate (gas) and the adsorbent (solid) (STUMM, 1992; STUMM; MORGAN, 1996).

Materials with high surface area values exhibit strong adsorption capacity, as the mechanism takes place at the adsorbent surface (VIANNA; VIANNA NETO, 2012). These materials can be either natural or synthetic (SOUZA, 2014) and may possess crystalline or amorphous structures (ORTIZ, 2011). Electrochemical polarization arises from the polarization of ions within the electrical double layer (EDL) at the adsorbate-adsorbent interface. This layer forms as the surface charge density of the adsorbent-in this case, calcium phosphate in contact with GHGs-is counterbalanced by charge distribution within the Stern (fixed) and diffuse layers. The Gouy-Chapman-Stern model establishes that the system tends toward surface electrical equilibrium and assumes that polarization of the Stern layer is the dominant contributor to the electrochemical attraction of adsorbate counter-ions (CO₂ and other GHGs). This assumption is based on the premise that overlapping of diffuse layers at the contact points of particulate adsorbents likely prevents significant polarization within that layer (LEROY et al., 2008).

In addition to electrochemical polarization, polarization arising at interfaces and discontinuities between the different phases that make up the medium also contributes to the grain surface polarization. This contribution is known as Maxwell-Wagner polarization, which is expected to dominate at high frequencies (e.g., >100 Hz). Due to its effect on surface conductivity, the Stern layer also contributes to MW polarization (LEROY et al., op. cit.; LEROY and REVIL, 2009). The advantages of adsorption include its operational simplicity, low operational requirements, ease of control, and high efficiency (MCEWEN et al., 2013).

The photocatalytic mechanism is a form of catalysis that uses light energy. It is currently applied for the removal of pollutants from air and water, in self-cleaning surfaces, and in solar-to-chemical energy conversion processes, such as the production of hydrogen or organic compounds. Photoreduction occurs at a solid-liquid or solid-gas interface through a photocatalyst, whose primary role is to absorb light and generate charges capable of catalyzing a chemical reaction (FERREIRA NETO, 2015).

In the state of the art, CO₂ mitigation processes include distillation, absorption, adsorption, gas-solid reactions, membrane separation, electrochemical pumping, hydrate formation, among others. However, most of these alternatives are dismissed due to low adsorption efficiencies and/or high operational costs. As a result, new solutions have become necessary, and materials such as carbon molecular sieves, zeolites, aluminophosphates, pillared clays (PILCs-hydrated aluminosilicates with permanent porosity obtained by introducing compounds with iron oxide through catalytic reduction), and various mesoporous solids have been tested. Nonetheless, none of these materials have demonstrated efficiency comparable to that of calcium phosphate materials with active hydroxyl sites.

Calcium phosphates are proposed in this patent as excellent CO₂ adsorbents through pressure swing adsorption (PSA). Amorphous calcium phosphate (ACP) and biphasic calcium phosphate (BCP, composed of hydroxyapatite and β-tricalcium phosphate [β-TCP]) were optimized for greenhouse gas (GHG) capture/immobilization and CO₂ photoreduction under UV radiation. Fluidized- and fixed-bed reactors, as well as surface coatings with BCPs and ACPs, were assembled to evaluate adsorption levels of GHGs and CO₂.

Gas mixtures with compositions equivalent to those found in various industrial processes were synthesized or directly coupled to reactors at CO₂ emission sources, simulating potential industrial-scale applications. The results demonstrated a significant reduction in CO₂ concentration - approximately 14% in the lowest observed values - indicating that CO₂ adsorption enhances stability by lowering surface energy, which favors the subsequent CO₂ photoreduction step. Theoretical predictions of adsorption energies and preferential adsorption sites further defined the most reactive regions of the unit cell, providing insights into the synthesis mechanisms of ACP, BCP, and HA, as well as isomerism or other features that influence both GHG mitigation phenomena (PINHEIRO et al., 2018).

In this context, the novelty and inventiveness of the processes and products proposed herein are evident, achieving results far superior to systems developed thus far. This premise is corroborated when comparing the present invention with the closest prior art, identified as follows:
Patent document EP0383105, which describes a process for obtaining a carbon dioxide adsorption mass for use in oxygen recycling machines, through the preparation of calcium hydroxide.
Patent CN108686616, which discloses carbon dioxide adsorption material and a preparation method thereof. The adsorption material is obtained by high-temperature calcination of a mixture containing boron and calcium, comprising CaO as the primary adsorbent and Ca₃B₂O₂ as the auxiliary adsorbent.
Patent CN109364892, which claims an adsorption material composed of a catalytic adsorption carrier and an absorption layer fixed to the carrier surface, including activated carbon, silicon nitride, zeolite powder, titanium dioxide, aluminum sulfate, nano-zinc oxide, polyvinyl alcohol, and water.
Patent CN109264713, which protects a method for preparing high-specific surface area porous carbon based on biomass tar, intended for the physical adsorption of carbon dioxide. Biomass tar is used as the carbon source.
Patent CN108940197, which discloses a method for preparing a carbon dioxide adsorption material using starch and urea as reagents.

Once again, it is evident that the alternatives have not been efficiently employed due to their low adsorption levels and/or high operational costs. It is precisely to overcome these limitations that the present patent has been proposed, with the objective and focus of developing porous matrix formulations with high CO₂ adsorption potential, capable of inducing artificial photosynthesis through the reduction of carbon dioxide, thereby producing environmentally beneficial compounds (O₂ and C) in a highly sustainable process. The details and functionalities of the invention can be better understood from the following detailed description, in accordance with the attached figures, where:
**Figure 1** shows an XRD pattern of the non-calcined sample.
**Figure 2** shows an adsorption test using a non-calcined sample.
**Figure 3** shows an XRD pattern of the non-calcined sample - (A) before and (B) after adsorption tests.
**Figure 4** shows the adsorption results of the mitigating material (A) non-calcined and (B) calcined, in environments with and without light.
**Figure 5** shows the adsorption results of the mitigating material, both calcined and non-calcined, in environments with light.
**Figure 6** refers to two SEM (scanning electron microscopy) images showing the roughness and porosity features of the obtained matrices.

### DETAILED DESCRIPTION:

The matrices developed and claimed herein, responsible for GHG mitigation, comprise up to five predominant phases in both non-calcined and calcined samples: hydroxyapatite or HA (PDF2/ICDD 090432) - Ca₁₀(PO₄)ₑ(OH)₂; monetite or CF (PDF2/ICDD 090080) - Ca(PO₃OH); calcium hydroxide or CH (PDF2/ICDD 441481) - Ca(OH)₂; beta-tricalcium phosphate or β-TCP (PDF2/ICDD 090169) - Ca₉(PO₄)₆, which may form binary microstructures such as biphasic calcium phosphate (HA and β-TCP); and amorphous calcium phosphate (ACP). The process employed here involves the use of these materials and/or phases, either individually or in combination, together with deliberately induced isomerisms, resulting in a high CO₂ and GHG adsorption capacity of approximately 140× to 500× their mass. The hydroxyl sites optimize pressure- and/or temperature-swing adsorption (PSA, TSA), followed by photocatalysis of the adsorbed GHG layer under ultraviolet (UV) radiation, particularly targeting carbon dioxide.

In the case of non-calcined samples, three major phases are present: calcium hydroxide (20-60%), hydroxyapatite (10-40%), and monetite (10-40%), along with a fourth minor phase-amorphous calcium phosphate (ACP), in the range of 5-20%. This optimized quaternary phase configuration is designed to enhance adsorption and photocatalysis, being especially suitable for mitigating gases under humid conditions (10-60% relative humidity) in flue gas streams from steelworks, cement plants, thermoelectric facilities, automotive exhaust systems, spacecraft cabins, and/or other dry CO₂-rich environments at temperatures between 273 K and 323 K, under ultraviolet radiation in the 150-350 nm range. In such conditions, the non-calcined particulate material is preferred.

The resulting matrices exhibit specific surface areas ranging from 30 m²/g to 300 m²/g and a CO₂ adsorption capacity of 140 to 1000 grams of CO₂ per gram of material. The mean particle diameter varies between 10 µm and 75 µm.

The presence of calcium hydroxide is justified by the synthesis method, as this phase results from a reagent intentionally fixed to form core-shell type nanoparticles. These consist of a core (rich in Ca/P) coated by a shell of calcium hydroxide anchored onto nucleated apatites. In calcined samples-processed at temperatures below 950 °C for periods ranging from 15 minutes to 6 hours-up to three main phases are identified. Thermal treatment promotes the formation of β-tricalcium phosphate (β-TCP), originating from diffusion reactions and reorganization of the compounds in the non-calcined sample, notably through the decomposition of monetite and calcium hydroxide. This process results in the formation of a new dehydrated (anhydrous) calcium phosphate phase. The preferred proportions for these three phases in calcined samples are: hydroxyapatite (25-50%), calcium hydroxide (20-40%), and β-TCP (20-40%).

As a result of thermal treatment, the calcined particulate materials-configured in this ternary phase system-are optimized to favor adsorption and photocatalysis, particularly for applications involving gas mitigation in environments with humidity levels above 60%. These include flue gas emissions from steelworks, cement plants, thermoelectric power stations, automotive exhaust systems, spacecraft cabins, and other CO₂-rich, humid environments. For operating temperatures between 293 K and 573 K under such conditions, the use of calcined particulate material is most appropriate.

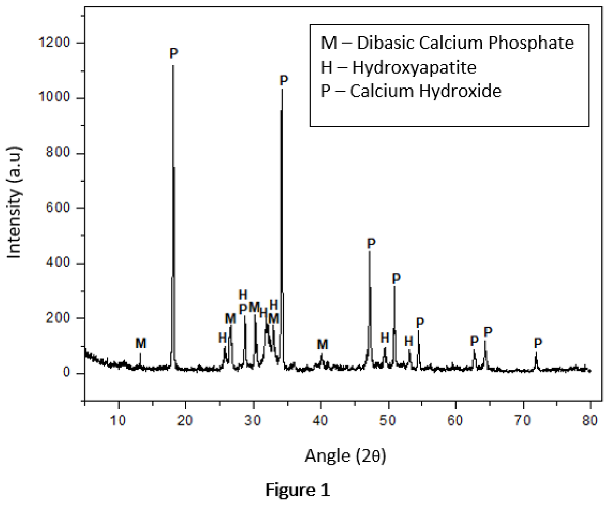

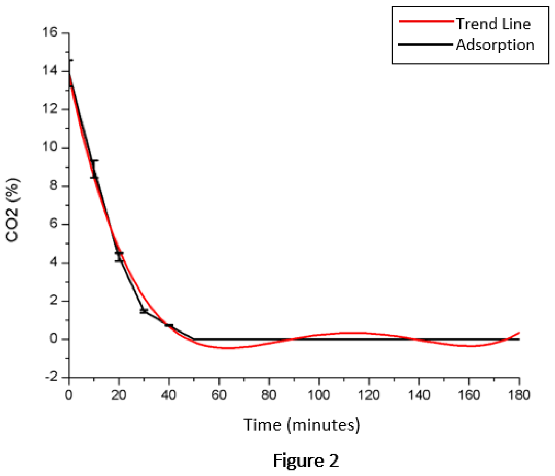

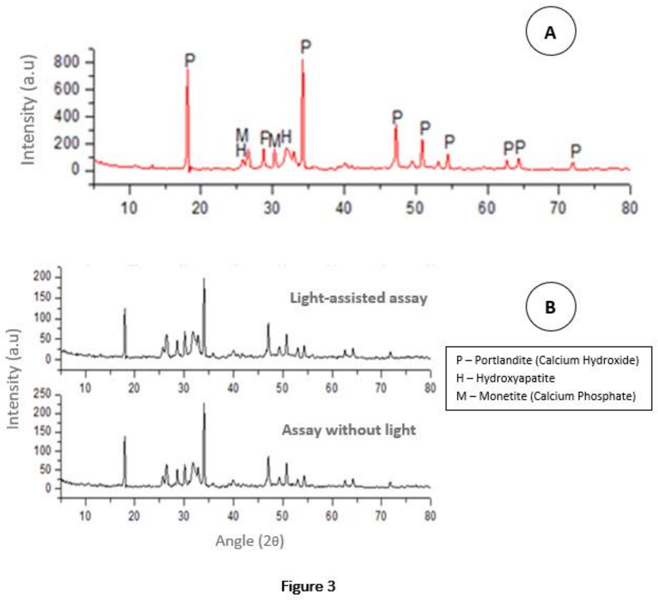

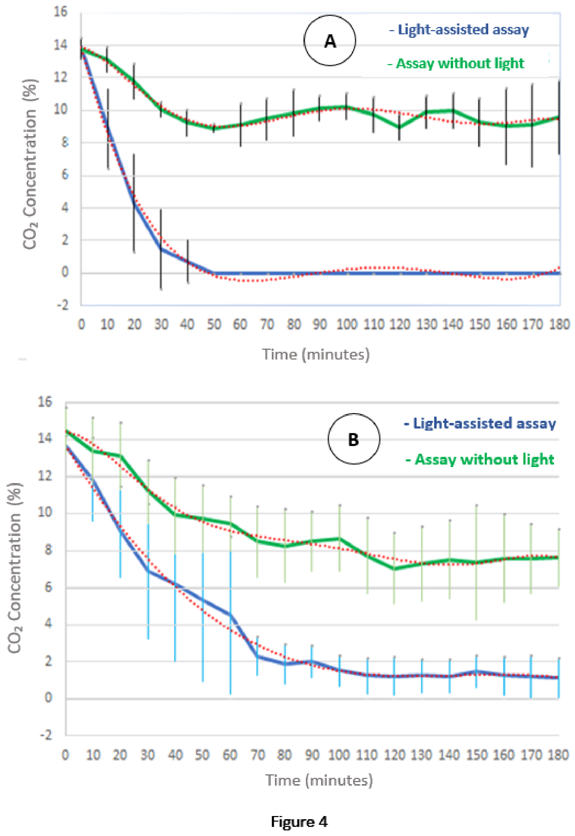

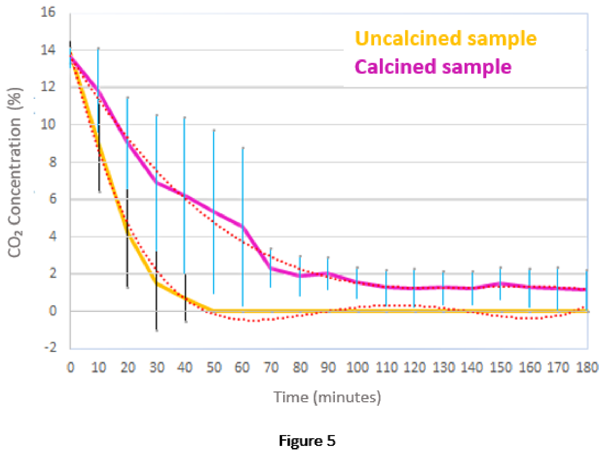

Figures 1, 3a, and 3b illustrate the distribution of crystalline and amorphous phases through X-ray diffraction (XRD) analysis of both non-calcined and calcined samples. Figures 2, 4a, 4b, and 5 demonstrate the effect of photocatalysis under natural sunlight or ultraviolet (UV) lamp exposure.

These two characteristics-adsorption and photocatalysis-demonstrated by the non-calcined and calcined matrices for GHG mitigation, have not been observed to occur simultaneously and synergistically in any other materials described in the prior art to date.

In contrast, all the matrices proposed in this invention exhibit a combined mechanism: the adsorption of GHGs on the surface of calcium phosphates is coupled with the photocatalytic phenomenon that enables the mitigation of emissions caused by anthropogenic activities, which have increased significantly since the First Industrial Revolution, from around 1770 to the present. These photocatalytic processes-driven by either natural light (sunlight) or artificial sources (UV lamps)-facilitate the removal of atmospheric pollutants adsorbed onto phosphate particle surfaces (in configurations such as fluidized beds, fixed beds, or bag filters), increasing the effective surface contact area with carbon dioxide, other GHG molecules, and/or dioxins and furans in a continuous flow system.

This self-cleaning surface phenomenon exhibited by calcium phosphates involves the conversion of electromagnetic energy (solar) into chemical energy, producing elemental carbon and graphene-like structures. The photoreduction of CO₂ and organic compounds occurs at the solid-gas interface (or solid-liquid, in the presence of adsorbed vapors), through the action of the photocatalyst-calcium phosphates. The high reaction rate is enhanced by light irradiation intensity; in other words, calcium phosphates (serving as both adsorbents and photocatalysts) are capable of absorbing light and generating charge carriers suitable for catalyzing the chemical transformation of greenhouse gases.

One possible route for obtaining the above-mentioned composites or constituents is their production starting from a calcium oxide (CaO) source, which may be derived from various organic or inorganic sources. This is followed by synthesis into hydroxyapatite, as described in the following reactions:

*CaO* + *H₂O* → *Ca(OH)₂* (Eq. 1)

3 *Ca(OH)₂* + 2 H₃PO₄ → *Cα*₃(PO₄)₂.H₂O (Eq. 2)

2 *Ca(OH)₂* + *Ca*₃(*PO*₄)₂.*H*₂*O* → *Ca*₅(*PO*₄)₃(*OH*) (Eq. 3)

It is important to emphasize that, by controlling the quantity of reagents, it is possible to induce the presence of free hydroxyl groups, which significantly enhance the material's adsorption capacity. The application of these matrices is preferably carried out through fluidized beds, fixed beds, or bag filters in industrial environments, to maximize the contact area between the material particles and the target gas to be adsorbed.

The catalytic and photocatalytic reactions were successfully optimized using calcium phosphate combinations for the mitigation of CO₂ and other greenhouse gases (GHGs). These reactions, which are currently being investigated individually by various researchers as a strategy for reducing CO₂ in atmospheric effluents, enable the simulation of artificial photosynthesis under ultraviolet (UV) electromagnetic radiation. In this process, CO₂ is reduced by means of light irradiation, which supplies the activation energy required to catalyze the conversion of GHGs-namely, the photocatalytic reduction of CO₂. The resulting effluents from this technology include environmentally valuable compounds such as molecular oxygen (O₂) and elemental carbon (C). The molecular oxygen is released back into the atmosphere, while the elemental carbon precipitates in the form of graphene nanoplates, which are recovered through a gas-washing step following photoreduction.

This sequence of chemical reactions-adsorption followed by photocatalysis-which drives the physicochemical mitigation of CO₂, is well documented in the literature. In the BET physical adsorption tests, the calcium phosphate adsorbents exhibited high specific surface areas, which favor the effective formation of a monolayer (or Stern layer) of CO₂ adsorbed on the particle surface, along with a diffuse layer composed of more weakly adsorbed CO₂ counterions. These two layers form a double layer that acts as a reservoir, continuously supplying the adsorption process and subsequently feeding the UV-driven photocatalysis. It is within the monolayer that photoreduction (or photocatalysis) preferentially occurs, resulting in the formation of molecular oxygen (O₂) and elemental carbon (C) in the form of graphene nanoplates. Both the measurement of surface area and pore volume are crucial for evaluating the efficiency of CO₂ and GHG gas-phase adsorption by the calcium phosphate particles.

The adsorption characteristics were assessed through BET analysis, and the isotherm profiles revealed that the process predominantly followed Type III and Type V curves, associated with hysteresis phenomena. These patterns confirm strong interactions between the adsorbate molecules and the surfaces of the investigated materials (phosphates and apatites). According to the literature, the photocatalytic activity of hydroxyapatite is most pronounced in the ultraviolet (UV) region of the electromagnetic spectrum, with a maximum absorption around 207 nm (corresponding to 5.99 eV). Although artificial light sources present different emission spectra compared to HA's absorption peak, they can still effectively drive the catalytic photoreduction of CO₂. These findings provided key evidence that paved the way for the synthesis and development of the GHG mitigation process based on the matrices proposed in this invention.><<<<<<<<

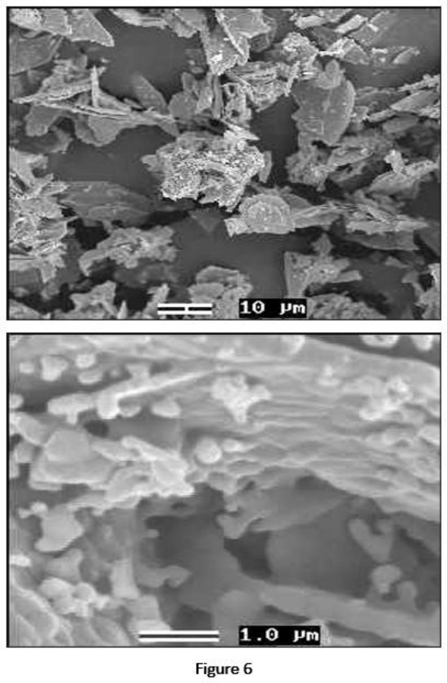

Notably, all these adsorptions and photocatalysis processes are mediated by the high specific surface area of the calcium phosphate matrices. Figure 6 presented herein contains microscopy images that clearly demonstrate this feature in the materials obtained, confirming that their performance and feasibility are indeed technically achievable.

In summary, the proposed invention discloses particulate materials based on porous matrices containing calcium phosphates and/or apatite, which exhibit CO₂ adsorption capacities far superior to those reported in the prior art. These materials also demonstrate high chemical stability and can be regenerated up to three times without undergoing significant microstructural changes. For comparison purposes, Table 1 presents the adsorption results of both calcined and non-calcined mitigating materials under illuminated and non-illuminated conditions, alongside reference materials reported in the literature for carbon dioxide mitigation.

**Table 1. Adsorption Results of Calcined and Non-Calcined Mitigating Materials Under Light and Dark Conditions in Comparison with Other Materials.**

| **Author** | **Material** | **Cycle and Temperature** | **Adsorbed Amount** |
|---|---|---|---|
| Cheung et al., 2013 | Zeolite (NaA) | 480 min, 25ºC | 0.16g CO₂/g NaA |
| Ribeiro et al., 2014 | Metal-Organic Framework (MOF) - MIL-101 (Cr) | 180 min, 25ºC | 0.748g CO₂/g MIL-101 |
| Present Patent | Calcined Calcium Phosphate (BCP) | No light - 2000 min, 25ºC | 210 g CO₂/g BCP |
| | | With light- 2000 min, 25ºC | 386g CO₂/g BCP |
| Present Patent | Non-Calcined Calcium | No light - 2000 min, 25ºC | 148 g CO₂/g ACP |
| | Phosphate (ACP) | With light - 2000 min, 25ºC | 1000 g CO₂/g ACP |

Finally, it is reiterated that modifications and adaptations to the compositions and processes described herein are possible, and the present specification should not be regarded as limiting, but rather as illustrative. Constructive variations that are evident to those skilled in the art, and that are technically equivalent, may be implemented without departing from the scope of protection of the invention.

## Claims

1. POROUS CALCIUM PHOSPHATE MATRICES FOR THE MITIGATION AND PHOTOCATALYSIS OF CARBON DIOXIDE AND OTHER GREENHOUSE GASES VIA AN ADSORPTIVE PROCESS, comprising matrices that include up to five predominant phases in non-calcined and/or calcined form; wherein, individually or in combination and including deliberately induced isomerisms, the matrices exhibit a CO₂ and GHG adsorption capacity of about 140x to 500x their own mass; the phases including hydroxyapatite (HA) - Ca₁₀(PO₄)₆(OH)₂; monetite - Ca(PO₃OH); calcium hydroxide - Ca(OH)₂; beta-tricalcium phosphate (β-TCP) - Ca₉(PO₄)₆; and amorphous calcium phosphate (ACP), forming binary microstructures comprising biphasic calcium phosphate (HA and β-TCP).

2. The porous calcium phosphate, according to claim 1, wherein a non-calcined sample comprises three major phases: calcium hydroxide (20-60%), hydroxyapatite (10-40%), and monetite (10-40%), and further comprises a minor phase of amorphous calcium phosphate (ACP) at 5-20%.

3. The porous calcium phosphate matrices, according to claim 1, wherein the matrix is deployed in flue gas stacks of steelworks, cement plants, or thermoelectric power stations, in automotive exhaust systems, in spacecraft cabins, and/or in other dry CO₂-rich environments at temperatures between 273 K and 323 K in the presence of UV radiation.

4. The porous calcium phosphate matrices, according to claim 1, wherein the matrices have a specific surface area ranging from 30 m²/g to 300 m²/g.

5. The porous calcium phosphate matrices, according to claim 1, wherein the matrices exhibit a CO₂ adsorption capacity of 140 to 1000 grams of CO₂ per gram of material.

6. The porous calcium phosphate matrices, according to claim 1, wherein the matrices have an average particle diameter ranging from 10 µm to 75 µm.

7. The porous calcium phosphate matrices, according to claim 1, wherein calcium phosphates are regenerable up to three times without significant reduction in adsorption and/or photocatalytic capacity.

8. A PROCESS FOR THE ADSORPTIVE MITIGATION AND PHOTOCATALYSIS OF CARBON DIOXIDE AND OTHER GREENHOUSE GASES, comprising the use of fluidized beds, fixed beds, or bag filters to increase the effective surface contact area of calcium phosphate matrices with carbon dioxide molecules, other GHGs, and/or dioxins and furans.

9. The process of claim 8, wherein the surface physicochemical decomposition of GHGs is carried out preferably under dry conditions using non-calcined calcium phosphates with humidity levels between 10% and 60%, and/or using calcined calcium phosphates for gases with humidity levels above 60%.

10. The process of claim 8, wherein the photocatalysis generates effluents comprising molecular oxygen (O₂) and elemental carbon (C) in nanostructured graphene-like forms, after treatment for the removal of particulate matter (ash) and/or sulfur (S).
1) POROUS CALCIUM PHOSPHATE MATRICES FOR THE MITIGATION AND PHOTOCATALYSIS OF CARBON DIOXIDE AND OTHER GREENHOUSE GASES VIA AN ADSORPTIVE PROCESS, comprising matrices that include up to five major phases among non-calcined and calcined samples which, individually and/or in association with one another, together with intentionally created isomeric forms, exhibit an adsorption capacity for CO₂ and other greenhouse gases of about 140 to 1000 times their own mass, said phases being: hydroxyapatite or HA - Ca₁₀(PO₄)₆(OH)₂; monetite - Ca(PO₃OH); calcium hydroxide - Ca(OH)₂; beta-tricalcium phosphate - Ca₉(PO₄)₆, forming binary microstructures such as biphasic calcium phosphate (HA and β-TCP) and amorphous calcium phosphate.
2) POROUS CALCIUM PHOSPHATE MATRICES FOR THE MITIGATION AND PHOTOCATALYSIS OF CARBON DIOXIDE AND OTHER GREENHOUSE GASES VIA AN ADSORPTIVE PROCESS, according to claim 1, wherein a non-calcined sample comprises three major phases: calcium hydroxide (20-60%), hydroxyapatite (10-40%), and monetite (10-40%), and further comprises a minor phase of amorphous calcium phosphate (ACP) at 5-20%.
3) POROUS CALCIUM PHOSPHATE MATRICES FOR THE MITIGATION AND PHOTOCATALYSIS OF CARBON DIOXIDE AND OTHER GREENHOUSE GASES VIA AN ADSORPTIVE PROCESS, according to claim 1, wherein they comprise a structure facilitating adsorption and subsequent catalytic reaction under ultraviolet radiation conditions, which are operative at temperatures between 273 and 573 K in chimneys (steel, cement, thermoelectric), automotive exhaust systems, spacecraft cabins, and/or other dry environments rich in CO₂.
4) POROUS CALCIUM PHOSPHATE MATRICES FOR THE MITIGATION AND PHOTOCATALYSIS OF CARBON DIOXIDE AND OTHER GREENHOUSE GASES VIA AN ADSORPTIVE PROCESS, according to claim 1, wherein the matrices have a specific surface area ranging from 30 m²/g to 300 m²/g.
5) POROUS CALCIUM PHOSPHATE MATRICES FOR THE MITIGATION AND PHOTOCATALYSIS OF CARBON DIOXIDE AND OTHER GREENHOUSE GASES VIA AN ADSORPTIVE PROCESS, according to claim 1, wherein the matrices exhibit a CO₂ adsorption capacity of 140 to 1000 grams of CO₂ per gram of material.
6) POROUS CALCIUM PHOSPHATE MATRICES FOR THE MITIGATION AND PHOTOCATALYSIS OF CARBON DIOXIDE AND OTHER GREENHOUSE GASES VIA AN ADSORPTIVE PROCESS, according to claim 1, wherein the matrices have an average particle diameter ranging from 10 µm to 75 µm.
7) POROUS CALCIUM PHOSPHATE MATRICES FOR THE MITIGATION AND PHOTOCATALYSIS OF CARBON DIOXIDE AND OTHER GREENHOUSE GASES VIA AN ADSORPTIVE PROCESS, according to claim 1, wherein calcium phosphates are regenerable up to three times without significant reduction in adsorption and/or photocatalytic capacity.
8) A PROCESS FOR THE ADSORPTIVE MITIGATION AND PHOTOCATALYSIS OF CARBON DIOXIDE AND OTHER GREENHOUSE GASES, comprising the use of fluidized beds, fixed beds, or bag filters to increase the effective surface contact area of calcium phosphate matrices with carbon dioxide molecules, other GHGs, and/or dioxins and furans.
9) A PROCESS FOR THE ADSORPTIVE MITIGATION AND PHOTOCATALYSIS OF CARBON DIOXIDE AND OTHER GREENHOUSE GASES, according to claim 8, wherein the surface physicochemical decomposition of GHGs is carried out preferably under dry conditions using non-calcined calcium phosphates with humidity levels between 10% and 60%, and/or using calcined calcium phosphates for gases with humidity levels above 60%.
10) A PROCESS FOR THE ADSORPTIVE MITIGATION AND PHOTOCATALYSIS OF CARBON DIOXIDE AND OTHER GREENHOUSE GASES, according to claim 8, wherein the photocatalysis generates effluents comprising molecular oxygen (O₂) and elemental carbon (C) in nanostructured graphene-like forms, after treatment for the removal of particulate matter (ash) and/or sulfur (S).
